(19) Europäisches Patentamt
European Patent Office
Office européen des brevets

(11) **EP 4 674 713 A1**

(12) **EUROPEAN PATENT APPLICATION**

(43) Date of publication:
**07.01.2026 Bulletin 2026/02**

(21) Application number: **24186324.0**

(22) Date of filing: **03.07.2024**

(51) International Patent Classification (IPC):
**B60W 20/30** (2016.01)

(52) Cooperative Patent Classification (CPC):
**B60W 10/08; B60K 6/48; B60W 10/11;**
**B60W 20/30; B60W 30/18109; B60W 30/18127;**
**B60W 50/0097;** B60K 2006/4825;
B60W 2050/0031; B60W 2300/125;
B60W 2510/081; B60W 2520/10; B60W 2710/1005

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **Winblad, Hanna**
**433 62 Sävedalen (SE)**
• **Heldmann, Joakim**
**422 50 Hisings Backa (SE)**

(74) Representative: **Valea AB**
**Box 1098**
**405 23 Göteborg (SE)**

(54) **A COMPUTER SYSTEM COMPRISING PROCESSING CIRCUITRY CONFIGURED TO ISSUE CONTROL DATA FOR CONTROLLING A TRANSMISSION OF A VEHICLE DURING A BRAKING EVENT**

(57) The present invention relates to a computer system and a computer-implemented method for issuing control data for controlling a transmission (200) of a vehicle during a braking event (300), the transmission (200) being adapted to individually engage each one of a plurality of gears, the method comprising:
- identifying (S 1), by processing circuitry of a computer system (400), an upcoming braking event (300) during which braking of the vehicle is performed;
- obtaining (S2), by the processing circuitry, driving characteristic data comprising data indicative of a current or predicted driving condition of the vehicle;
- inputting (S3), by the processing circuitry, the driving characteristic data to a braking characteristic model to determine braking characteristic data indicative of predicted braking characteristics during the upcoming braking event (300); and
- selecting (S4), by the processing circuitry, a gear to be engaged by the transmission (200) on the basis of the braking characteristic data.

FIG. 1

## Description

## TECHNICAL FIELD

The disclosure relates generally to gear selection. In particular aspects, the disclosure relates to a computer system and/or a method for issuing control data for controlling a transmission of a vehicle during a braking event. The disclosure also relates to a computer program product, and a non-transitory computer-readable storage medium. Moreover, the disclosure also relates to a vehicle which can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Vehicles are generally equipped with a transmission that the vehicle to select a gear from a plurality of shiftable gears. The selection is primarily based on inputs from the accelerator and brake pedals, as well as data from various vehicle sensors, including those that monitor vehicle speed and/or engine load. The process of gear selection is highly complex, requiring adaptation to diverse driving scenarios. For instance, determining whether to downshift during a braking event may pose a challenge due to the variability of braking scenarios. The complexity may be further increased in electric vehicles, which may also consider energy recuperation in addition to braking dynamics when making gear selection decisions. For instance, opting not to downshift can sometimes be advantageous, as it may prevent power interruptions, allowing continuous energy recuperation during vehicle deceleration. However, downshifting may be beneficial in reaching a better operating point in terms of efficiency under certain conditions. Therefore, there is a strive to develop improved technology relating to gear selection.

## SUMMARY

According to a first aspect of the disclosure, a computer system comprising processing circuitry configured to issue control data for controlling a transmission of a vehicle during a braking event is provided. The transmission is adapted to individually engage each one of a plurality of gears. The processing circuitry is further configured to:

- identify an upcoming braking event during which braking of the vehicle is performed,
- obtain driving characteristic data comprising data indicative of a current or predicted driving condition of the vehicle;
- input the driving characteristic data to a braking characteristic model to determine braking characteristic data indicative of predicted braking characteristics during the upcoming braking event; and
- select a gear to be engaged by the transmission on the basis of the braking characteristic data.

The first aspect of the disclosure may seek to provide an improved computer system that may select an appropriate gear during braking events. For instance, by use of the braking characteristics model, it may be possible to predict braking characteristics for different braking scenarios, including the braking characteristics for the upcoming braking event. Accordingly, an appropriate gear may be selected. A technical benefit may include improved operation performance of the vehicle.

Optionally in some examples, including in at least one preferred example, the braking characteristic data comprises information indicative of one or more of the following parameters: a braking duration, a final vehicle speed at the end of the braking event, and an average braking power required for preforming the braking event. By way of example, a relatively short braking duration may suggest no need for a gear shift. A minor speed change, e.g., the difference between a current vehicle speed and the final vehicle speed, may also suggest no need for a gear shift. A technical benefit may include that, by use of the above parameters, which may reflect suitable braking characteristics for supporting a gear selection decision, an appropriate gear may be selected.

Optionally in some examples, including in at least one preferred example, at least one, preferably each one, of the parameters of the braking characteristics is classified into one of the following categories: a high level, a medium level, or a low level. In this way, it may ensure that the braking characteristic data is effectively managed, potentially simplifying a logic for the computer system to make a gear selection decision, which may make the selection process more efficient.

Optionally in some examples, including in at least one preferred example, the vehicle comprises a regenerative braking system being adapted to convert at least a portion of the vehicle's kinetic energy into electric energy during a braking event. The processing circuitry is configured to select the gear to be engaged by the transmission on the basis of the braking characteristic data such that at least one of the following conditions is fulfilled: an amount of the electric energy that can be converted by the regenerative braking system during the braking event is above an energy conversion threshold and a drive comfort parameter of the vehicle is within an allowable drive comfort parameter range.

Herein, a cost function may be employed to determine whether to shift the gear, with the goal to ensure that the at least the one of the above conditions is fulfilled. For instance, it may be determined to stay on the current gear so as not to interrupt energy recouperation, making sure that the amount of the electric energy that can be converted by the regenerative braking system during the braking event is above an energy conversion threshold, even if the current gear may not be the most efficient gear for transferring the power. A technical benefit may include improved overall performance of the vehicle, as the gear selection may be adapted to various performance demands.

Optionally in some examples, including in at least one preferred example, the processing circuitry is configured to select the gear to be engaged by the transmission on the basis of the braking characteristic data such that a torque imparted on the regenerative braking system during the upcoming braking event is below a maximum allowed torque. By way of example only, a regenerative braking system may comprise one or more electric motors, which may be controlled to be operated in a reverse direction and function as generators, recapturing energy that would otherwise be lost as heat during braking. The torque imparted on the regenerative braking system herein may refer to the torque imparted on the one or more electrical motors that for producing electric power, while the maximum allowed torque may refer to the physical maximum limits of the electric motors in terms of torque. A technical benefit may include that the regenerative braking system is not imparted an excessive torque during braking.

Optionally in some examples, including in at least one preferred example, the processing circuitry is further configured to:

- on the basis of the maximum allowed torque, an average braking power required for preforming the braking event and also preferably a maximum allowed power that can be imparted on the regenerative braking system during the upcoming braking event, determine a shift point speed indicative of a rotational speed of a portion of the regenerative braking system at or below which a gear shift of the transmission should be carried out, preferably the gear shift is to a lower gear than the gear currently engaged.

By determining a shift point speed in relation to the above parameters, it may ensure that the regenerative braking system is operated under its physical limits during the braking event. A technical benefit may include a reduced risk of overloading of the regenerative braking system. It shall be noted that different shift points may be determined for braking events that require different braking power. As mentioned above, the regenerative braking system may comprise an electric motor, and herein, the rotational speed of a portion of the regenerative braking system may refer to the rotational speed of a portion of the electric motor. Moreover, a maximum allowed power that can be imparted on the regenerative braking system during the upcoming braking event may refer to the physical maximum limits of the electric motors in terms of power.

Optionally in some examples, including in at least one preferred example, the processing circuitry is further configured to:

- obtain a current vehicle speed and a current regenerative braking system speed indicative of a current rotational speed of a portion of the regenerative braking system,
- determine a predicted level or value for each one of the following parameters comprised in braking characteristic data: a predicted braking duration level associated with a braking duration of the upcoming braking event, a predicted vehicle final speed associated with a vehicle speed at the end of the upcoming braking event, and a predicted average braking power level for performing the upcoming braking event,
- select the gear that is currently engaged in response to determining that at least one of the following criteria is fulfilled:

  ○ the predicted braking duration level is below a first braking duration threshold level, or
  ○ the predicted average braking power level is below a first braking power threshold level, or
  ○ an absolute value of the difference between the predicted final vehicle speed and the obtained current vehicle speed is below a predetermined speed difference threshold, and the obtained current regenerative braking system speed is higher than the shift point speed.

Optionally in some examples, including in at least one preferred example, the processing circuitry is further configured to:

- obtain a current vehicle speed and a current regenerative braking system speed indicative of a current rotational speed of a portion of the regenerative braking system,
- determine a predicted level or value for each one of the following parameters comprised in braking characteristic data: a predicted braking duration level associated with a braking duration for the upcoming braking event, a predicted vehicle final speed associated with a vehicle speed at the end of the upcoming braking event, and a predicted average braking power level for performing the upcoming braking event, and
- select the gear that is lower than a gear that is currently engaged if the following criterion is fulfilled:

  ○ the obtained current regenerative braking system speed is lower than the shift point speed,

  or alternatively if the following criteria are fulfilled:

  ○ the predicted braking duration level is above a second braking duration threshold level, wherein the second braking duration threshold level is preferably higher than the first braking duration threshold level, and
◦ the obtained current regenerative braking system speed is equal to, or higher than the shift point speed, if the regenerative braking system speed is expected to be lower than the shift point speed during the upcoming braking event.

Optionally in some examples, including in at least one preferred example, the processing circuitry is further configured to:

- in response to selecting a gear that is lower than the gear that is currently engaged, determine a time point to initiate the engagement of the selected gear, and
- issue control data for controlling the transmission to engage the selected gear at the determined time point.

Optionally in some examples, including in at least one preferred example, the time point corresponding to an instant when a regenerative braking system speed is substantially equal to the shift point speed, if the obtained current regenerative braking system speed is higher than the shift point speed. Herein, the term 'substantially' may imply that the instant when the regenerative braking system speed is nearly identical to the shift point speed, with the possibility of minor difference.

Optionally in some examples, including in at least one preferred example, the current or predicted driving condition of the vehicle comprises one or more of the following parameters: a vehicle length, preferably measured between a front bumper to a rearmost point of a rear bumper; a gross vehicle weight; a current speed; a current cruise control set speed and a brake pedal depression state. A technical benefit may include that, by use of these parameters, it may be possible to have one single model capable of predicting braking characteristics for various types of vehicles. For instance, by inputting the actual values of the vehicle length and the gross vehicle weight, it may be possible to predict braking characteristics for both heavy-duty vehicles and passenger cars.

Optionally in some examples, including in at least one preferred example, the current or predicted driving condition of the vehicle comprises one or more of the following: a road profile of a road that the vehicle is intended to follow, preferably the road profile comprises at least one of the following: an inclination of the road, a curvature of the road, an existence of roundabouts or crossings on the road, and traffic lights information.

Optionally in some examples, including in at least one preferred example, the current or predicted driving condition of the vehicle further comprises information about a preceding vehicle in accordance with at least one of the following: a distance to the preceding vehicle, a vehicle speed of the preceding vehicle, and an acceleration of the preceding vehicle.

Optionally in some examples, including in at least one preferred example, the braking characteristic model is a trained model, preferably a trained learning model such as a machine-learning model, more preferred a neural network model. The model may be trained to learn to map a correlation between the driving characteristics and the braking characteristics, such that when new driving characteristic data is input to the model, it may accurately predict the braking characteristics for a new braking event.

Optionally in some examples, including in at least one preferred example, the trained model is trained using braking events that have been performed, by real-world vehicles or by use of computer simulations, at known driving conditions of the vehicle. The braking events or the computer simulation may be performed a sufficient number of times, such that various driving conditions have been covered, which may result in a trained model with high accuracy.

Optionally in some examples, including in at least one preferred example, the control data for controlling a transmission of a vehicle during a braking event comprises information indicative of the gear to be engaged by the transmission.

According to a second aspect of the disclosure, a vehicle is provided. The vehicle comprises the computer system according to the first aspect of the disclosure. Moreover, the vehicle comprises a transmission adapted to individually engage each one of a plurality of gears.

Optionally in some examples, including in at least one preferred example, the vehicle further comprises a set of wheels and a regenerative braking system being adapted to convert at least a portion of the vehicle's kinetic energy into electric energy during a braking event. The regenerative braking system and the set of wheels are located on opposite sides of the transmission, as seen along a direction of torque transfer from the wheels to the regenerative braking system during a braking event.

Optionally in some examples, including in at least one preferred example, the vehicle further comprises a set of wheels and a power unit, such as an internal combustion engine, being adapted to supply power to the set of wheels. The power unit and the set of wheels are located on opposite sides of the transmission, as seen along a direction of torque transfer from the power unit to the set of wheels.

According to a third aspect of the disclosure, a computer-implemented method for issuing control data for controlling a transmission of a vehicle during a braking event is provided. The transmission is adapted to individually engage each one of a plurality of gears. The method comprises:

- identifying, by processing circuitry of a computer system, an upcoming braking event during which braking of the vehicle is performed;

- obtaining, by the processing circuitry, driving characteristic data comprising data indicative of a current or predicted driving condition of the vehicle;
- inputting, by the processing circuitry, the driving characteristic data to a braking characteristic model to determine braking characteristic data indicative of predicted braking characteristics during the upcoming braking event; and
- selecting, by the processing circuitry, a gear to be engaged by the transmission on the basis of the braking characteristic data.

Technical benefits of the third aspect of the disclosure are largely analogous to the technical benefit of the first aspect of the disclosure. It shall also be noted that all examples of the second aspect of the disclosure are applicable to and/or combinable with all embodiments of the first aspect of the disclosure, and vice versa.

Optionally in some examples, including in at least one preferred example, the braking characteristic data comprises information indicative of one or more of the following parameters: a braking duration, a final vehicle speed at the end of the braking event, and an average braking power required for preforming the braking event.

Optionally in some examples, including in at least one preferred example, at least one, preferably each one, of the parameters of the braking characteristics is classified into one of the following categories: a high level, a medium level, or a low level.

Optionally in some examples, including in at least one preferred example, the vehicle comprises a regenerative braking system being adapted to convert at least a portion of the vehicle's kinetic energy into electric energy during a braking event. The method further comprises: selecting, by the processing circuitry, the gear to be engaged by the transmission on the basis of the braking characteristic data such that at least one of the following conditions is fulfilled: an amount of the electric energy that can be converted by the regenerative braking system during the braking event is above an energy conversion threshold; a drive comfort parameter of the vehicle is within an allowable drive comfort parameter range.

Optionally in some examples, including in at least one preferred example, the method further comprises: selecting, by the processing circuitry, the gear to be engaged by the transmission on the basis of the braking characteristic data such that a torque imparted on the regenerative braking system during the upcoming braking event is below a maximum allowed torque.

Optionally in some examples, including in at least one preferred example, the method further comprises:

- on the basis of the maximum allowed torque, an average braking power required for preforming the braking event and preferably also a maximum allowed power that can be imparted on the regenerative braking system during the upcoming braking event, determining, by the processing circuitry, a shift point speed indicative of a rotational speed of a portion of the regenerative braking system at or below which a gear shift of the transmission should be carried out, preferably the gear shift is to a lower gear than the gear currently engaged.

Optionally in some examples, including in at least one preferred example, the method further comprises:

- obtaining, by the processing circuitry, a current vehicle speed and a current regenerative braking system speed indicative of a current rotational speed of a portion of the regenerative braking system,
- determining, by the processing circuitry, a predicted level or value for each one of the following parameters comprised in braking characteristic data: a predicted braking duration level associated with a braking duration of the upcoming braking event, a predicted vehicle final speed associated with a vehicle speed at the end of the upcoming braking event, and a predicted average braking power level for performing the upcoming braking event,
- selecting, by the processing circuitry, the gear that is currently engaged in response to determining that at least one of the following criteria is fulfilled is fulfilled:

  ○ the predicted braking duration level is below a first braking duration threshold level, or
  ○ the predicted average braking power level is below a first braking power threshold level, or
  ○ an absolute value of the difference between the predicted final vehicle speed and the obtained current vehicle speed is below a predetermined speed difference threshold, and the obtained current regenerative braking system speed is higher than the shift point speed.

Optionally in some examples, including in at least one preferred example, the method further comprises:

- obtaining, by the processing circuitry, a current vehicle speed and a current regenerative braking system speed indicative of a current rotational speed of a portion of the regenerative braking system,
- determining, by the processing circuitry, a predicted level or value for each one of the following parameters comprised in braking characteristic data: a predicted braking duration level associated with a braking duration for the upcoming braking event, a predicted vehicle final speed associated with a vehicle speed at the end of the upcoming braking event, and a predicted average braking power level for performing the upcoming braking event, and

- selecting, by the processing circuitry, a gear that is lower than the gear that is currently engaged if the following criterion is fulfilled:

  ◦ the obtained current regenerative braking system speed is lower than the shift point speed.

or alternatively if the following criteria are fulfilled:

  ◦ the predicted braking duration level is above a second braking duration threshold level, wherein the second braking duration threshold level is preferably higher than the first braking duration threshold level, and
  ◦ the obtained current regenerative braking system speed is equal to, or higher than the shift point speed, if the regenerative braking system speed is expected to be lower than the shift point speed during the upcoming braking event.

Optionally in some examples, including in at least one preferred example, the method further comprises:

- in response to selecting a gear that is lower than the gear that is currently engaged, determining, by the processing circuitry, a time point to initiate the engagement of the selected gear, and
- issuing, by the processing circuitry, control data for controlling the transmission to engage the selected gear at the determined time point.

Optionally in some examples, including in at least one preferred example, the time point corresponding to an instant when a regenerative braking system speed is substantially equal to the speed at the shift point speed, if the obtained current regenerative braking system speed is higher than the speed at the shift point speed.
Optionally in some examples, including in at least one preferred example, the current or predicted driving condition of the vehicle comprises one or more of the following parameters: a vehicle length, preferably measured between a front bumper to a rearmost point of a rear bumper; a gross vehicle weight; a current speed; a current cruise control set speed and a brake pedal depression state.
Optionally in some examples, including in at least one preferred example, the current or predicted driving condition of the vehicle comprises one or more of the following: a road profile of a road that the vehicle is intended to follow, preferably the road profile comprises at least one of the following: an inclination of the road, a curvature of the road, an existence of roundabouts and/or crossings on the road, and traffic lights information.

Optionally in some examples, including in at least one preferred example, the current or predicted driving condition of the vehicle further comprises information about a preceding vehicle in accordance with at least one of the following: a distance to the preceding vehicle, a vehicle speed of the preceding vehicle, and an acceleration of the preceding vehicle.
Optionally in some examples, including in at least one preferred example, the braking characteristic model is a trained model, preferably a trained learning model such as a machine-learning model, more preferred a neural network model.
Optionally in some examples, including in at least one preferred example, the trained model is trained using braking events that have been performed, by real-world vehicles or by use of computer simulations, at known driving conditions of the vehicle.
Optionally in some examples, including in at least one preferred example, the control data for controlling a transmission of a vehicle during braking comprises information indicative of the gear to be engaged by the transmission.
According to a fourth aspect of the disclosure, a computer program product is provided. The computer program product comprises program code for performing, when executed by the processing circuitry, the method according to the third aspect of the disclosure.
According to a fifth aspect of the disclosure, a non-transitory computer-readable storage medium is provided. The storage medium comprises instructions, which when executed by the processing circuitry, cause the processing circuitry to perform the method according to the third aspect of the disclosure.
The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

**BRIEF DESCRIPTION OF THE DRAWINGS**

Examples are described in more detail below with reference to the appended drawings.

FIG. 1 is a schematic side view of a vehicle according to an example;

FIG. 2 is a schematic view of power flows of a vehicle during operation;

FIG. 3 schematic shows a scenario when an upcoming braking event is identified;

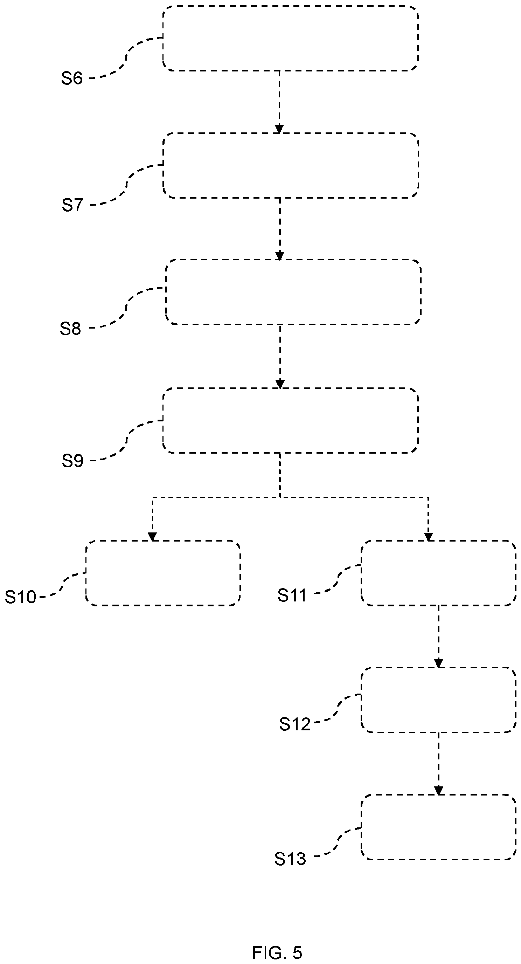

FIG. 4 and FIG. 5 are flow charts illustrating a method of for issuing control data for controlling a transmission of a vehicle during a braking event;

**FIG. 6** shows an example indicating shift point speeds at or below which a gear shift of the transmission should be carried out, and

**FIG. 7** is a schematic diagram of an exemplary computer system for implementing methods disclosed herein.

## DETAILED DESCRIPTION

The detailed description set forth below provides information and examples of the disclosed technology with sufficient detail to enable those skilled in the art to practice the disclosure.

A vehicles is equipped with a transmission that enable it to select a gear from a plurality of shiftable gears. For an automatic transmission, the selection is primarily based on inputs from the accelerator and brake pedals, as well as data from various vehicle sensors, including those that monitor vehicle speed and/or engine load. The process of gear selection may be complex, requiring adaptation to diverse driving scenarios. For instance, determining whether to downshift during a braking event may pose a challenge due to the variability of braking scenarios. The complexity may be further increased in electric vehicles, which may also consider energy recuperation in addition to braking dynamics when making gear selection decisions. For instance, opting not to downshift can sometimes be advantageous, as it may prevent power interruptions, allowing continuous energy recuperation during vehicle deceleration. However, downshifting may be beneficial in reaching a better operating point under certain conditions.

The present disclosure may seek to provide an improved computer system and/or a method that may be able to select an appropriate gear during braking events. A technical benefit may include improved operation performance of the vehicle.

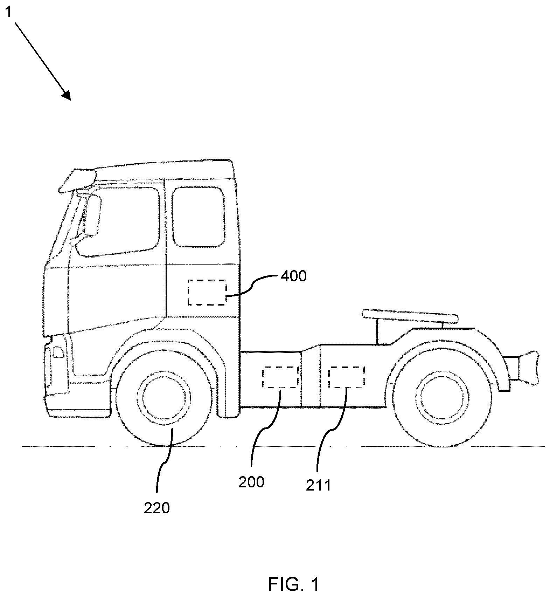

**FIG. 1** depicts a vehicle 1, which is exemplified by an electric truck. Even though an electric truck is shown, it shall be noted that the disclosure is not limited to this type of vehicle, but it may also be used for other electric vehicles, such as a bus, construction equipment, e.g., a wheel loader or an excavator. The present disclosure is also applicable for a hybrid vehicle, e.g. a vehicle comprises a combustion engine and an electric engine.

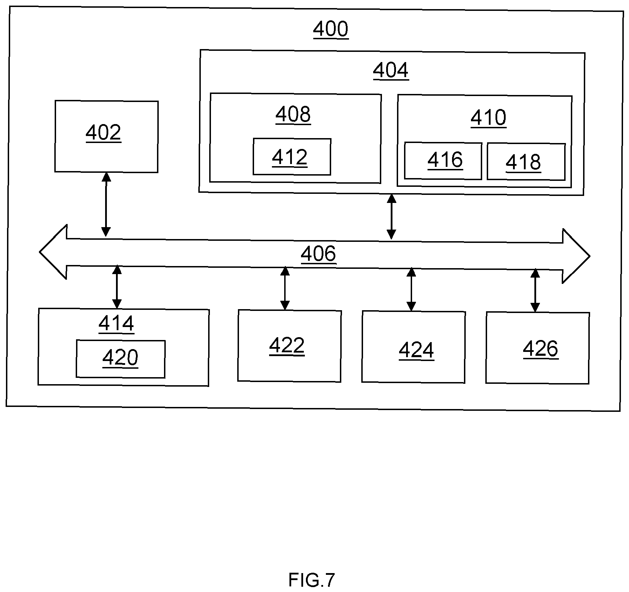

The vehicle 1 comprises a power unit 211, for instance comprising an electric motor, which may provide propulsion power to the vehicle 1 via a transmission 200. The transmission 200 may convert a torque generated by the power unit 211 to a torque that is suitable for driving a set of the wheels 220 and transfer the torque to the set of the wheels 220. The transmission 200 may comprise a plurality of gears and may be adapted to individually engage each one of a plurality of gears, as needed. Each one of the gears may correspond to a ratio between a rotational speed of shaft connected to the power unit 211 and a shaft connected to the set of wheels 220 are located, and by selecting different gears, the torque transmitted to the wheels 220 can be regulated. As a result, the speed of the vehicle 1 can be controlled. For instance, during braking of the vehicle, lower gears may be selected to effectively slow down the vehicle 1. Furthermore, the vehicle 1 comprises a computer system 400, which may comprise one or more control units, such as processing circuitry 402 (see **FIG. 7**) that can issue control data for controlling the transmission 200. As indicated by the dotted lines in **FIG. 1,** the computer system 400 may be adapted to communicate with the transmission 200 and possibly also the power unit 211.

Moreover, the vehicle 1 may comprise a regenerative braking system 210 which may convert at least a portion of the vehicle's kinetic energy into electric energy during a braking event. Purely by way example, the power unit 211, for instance if comprising an electric motor, may be controlled to be operated in a reverse direction to function as generators, recapturing energy that would otherwise be lost as heat during braking. Therefore, the power unit 211 may be seen as forming part of or even constituting the regenerative braking system 210. As another alternative, the regenerative braking system 210 may be a separate entity, e.g. an electric motor, and the power unit 211 may be an internal combustion engine. The regenerative braking system 210 and the power unit 211 may in such examples be arranged in series or in parallel.

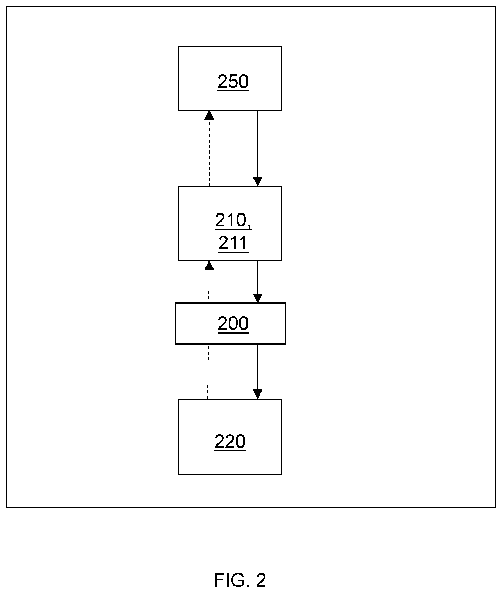

**FIG. 2** shows power flows of a vehicle during operation. The dashed line on the left indicates a power transfer path during a braking event, while the solid line on the right represents a power transfer path when the vehicle 1 is accelerating or driving with a certain speed. As indicated by the solid line, when the vehicle is not in a braking state, propulsion power or torque is transferred from the power unit 211 to the set of wheels 220 via the transmission 200. The vehicle 1 may further comprise an energy storage system 250 that has one or more traction batteries for feeding electric power to the power unit 211. Moreover, as indicated by the dashed line, during a braking event, at least a portion of the vehicle's kinetic energy is converted to electric energy from the wheel side 220 to the power unit 211. In this scenario, the power unit 211 may for instance be controlled to function as a generator, forming part of or constituting a regenerative braking system 210. The power unit 211 can further transfer the electric power to the energy storage system 250 by charging the one or more traction batteries within the energy storage system 250. As such, it may be concluded that the regenerative braking system 210 and the set of wheels 220 are located on opposite sides of the transmission 200, as seen along a direction of torque transfer from the wheels to the regenerative braking system 210 during a braking event 300. As another option, the power unit 211 may comprise or be constituted by an internal combustion engine. In a braking state, the internal combustion engine may supply an engine braking torque.

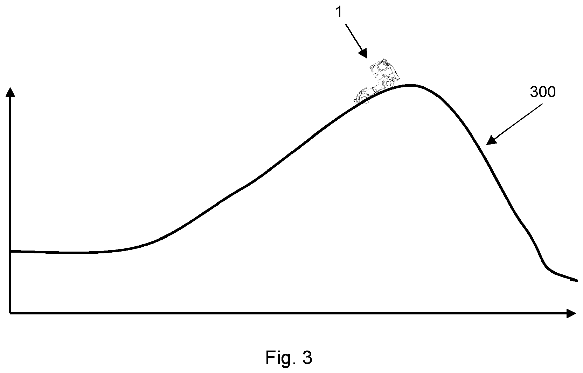

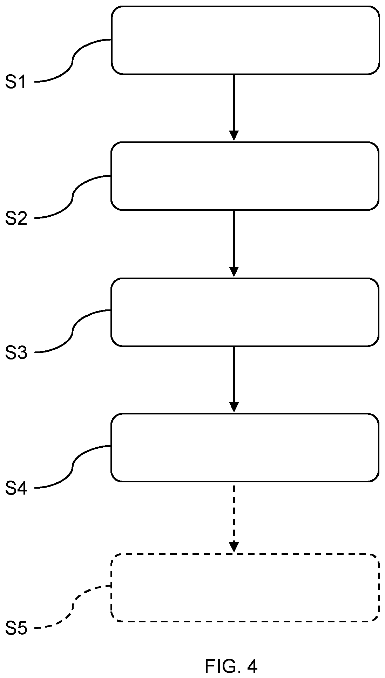

**FIG. 4** illustrates a method of issuing control data for controlling a transmission of a vehicle during a braking event, such as the braking event 300 illustrated in **FIG. 3.** The method may be performed by processing circuitry of a computer system 400, such as the vehicle onboard computer system 400. The method comprises at least one of the actions listed in the following, which, unless otherwise indicated, may be taken in any suitable order.

**S1:** identifying an upcoming braking event, the upcoming braking event 300 during which braking of the vehicle is performed. The braking event 300 may for instance occur when the vehicle 1 is predicted to travel downhill, as illustrated in **FIG. 3.** The identification may be done with the assistance of any suitable sensors, such as GPS sensors and/or vehicle environmental sensors.

**S2:** obtaining driving characteristic data comprising data indicative of a current or predicted driving condition of the vehicle. Specifically, the current or predicted driving condition of the vehicle may comprise one or more of the following parameters: a vehicle length, preferably measured between a front bumper to a rearmost point of a rear bumper; a gross vehicle weight; a current speed; a current cruise control set speed and a brake pedal depression state. The current or predicted driving condition of the vehicle may further comprise one or more of the following: a road profile of a road that the vehicle is intended to follow, preferably the road profile comprises at least one of the following: an inclination of the road, a curvature of the road, an existence of roundabouts and/or crossings on the road, and traffic lights information. The current or predicted driving condition of the vehicle may also comprise information about a preceding vehicle in accordance with at least one of the following: a distance to the preceding vehicle, a vehicle speed of the preceding vehicle, and an acceleration of the preceding vehicle.

The data may be received wirelessly or via wire, from a plurality of on-board sensors, for instance, a vehicle speed sensor vehicle and/or environmental sensors. The data may alternatively be obtained from one or more intermediate units, e.g. memory units. The data may be obtained upon request from the computer system 400 or may be obtained at regular or irregular time intervals without any prior request. Alternatively, the information may be obtained continuously obtained whenever the vehicle on-board sensors have new/updated information to provide to the computer system 400.

**S3:** inputting the driving characteristic data to a braking characteristic model to determine braking characteristic data indicative of predicted braking characteristics during the upcoming braking event 300.

The braking characteristic model may be a trained model, preferably a trained learning model such as a machine-learning model, more preferred a neural network model, whereby the trained model is trained using braking events that have been performed, by real-world vehicles or by use of computer simulations, at known driving conditions of the vehicle. The model may be trained to learn to map a correlation between the driving characteristics and the braking characteristics, such that when new driving characteristic data, such as the current driving characteristic data, is input to the model, it may accurately predict the braking characteristics for a new braking event, such as the upcoming braking event 300.

In some examples, the braking characteristic data may comprise information indicative of one or more of the following parameters: a braking duration, a final vehicle speed at the end of the braking event, and an average braking power required for preforming the braking event. Furthermore, at least one, preferably each one, of the parameters of the braking characteristics is classified into one of the following categories: a high level, a medium level, or a low level.

**S4:** selecting a gear to be engaged by the transmission 200 on the basis of the braking characteristic data.

In some examples, the method may further comprise the action S5 selecting the gear to be engaged by the transmission 200 on the basis of the braking characteristic data such that at least one of the following conditions is fulfilled: an amount of the electric energy that can be converted by the regenerative braking system during the braking event 300 is above an energy conversion threshold; a drive comfort parameter of the vehicle is within an allowable drive comfort parameter range and an efficiency of a power unit of the vehicle is above an efficiency threshold. In these examples, a cost function may be employed to determine whether to shift the gear, with the goal to ensure that the at least the one of the above conditions is fulfilled. For instance, it may be determined to stay on the current gear so as not to interrupt energy recouperation, making sure that the amount of the electric energy that can be converted by the regenerative braking system during the braking event is above an energy conversion threshold, even if the current gear may not be the most efficient gear for transferring the power.

In some examples, the method may further comprise the following optional actions: S6: selecting the gear to be engaged by the transmission 200 on the basis of the braking characteristic data such that a torque imparted on the regenerative braking system 210 during the upcoming braking event 300 is below a maximum allowed torque.

Moreover, on the basis of the maximum allowed torque, an average braking power required for preforming the braking event and preferably also a maximum allowed power that can be imparted on the regenerative braking system 210 during the upcoming braking event 300. The method may further comprise S7: determining a shift point speed indicative of a rotational speed of a portion of the regenerative braking system 210 at or below which a gear shift of the transmission 200 should be carried out.

Herein, the torque imparted on the regenerative braking system may refer to the torque imparted on the regenerative braking system during the braking event, while the maximum allowed torque may refer to the maximum torque that is allowed to be imparted on the regenerative braking system 210. If the regenerative braking system 210 comprises or is constituted by an electric motor, the torque imparted on the regenerative braking system may refer to a torque imparted on the electric motor. The maximum torque may be a physical limit of the regenerative braking system 210. Moreover, a maximum allowed power that can be imparted on the regenerative braking system during the upcoming braking event may refer to a physical maximum limit of the regenerative braking system 210in terms of power. If the regenerative braking system 210 comprises or is constituted by an electric motor, the maximum allowed power that can be imparted on the regenerative braking system during the upcoming braking event may refer to the maximum allowed power that can be imparted on the electric motor during the upcoming braking event. Furthermore, if the regenerative braking system 210 comprises or is constituted by an electric motor, the rotational speed of a portion of the regenerative braking system may refer to the rotational speed of the electric motor.

Different shift point speeds may be determined for different braking events, each requiring distinct average braking power level. Consequently, each one of the shift point speed is derived from a maximum allowed torque of the electric motors and a maximum allowed power of the electric motors.

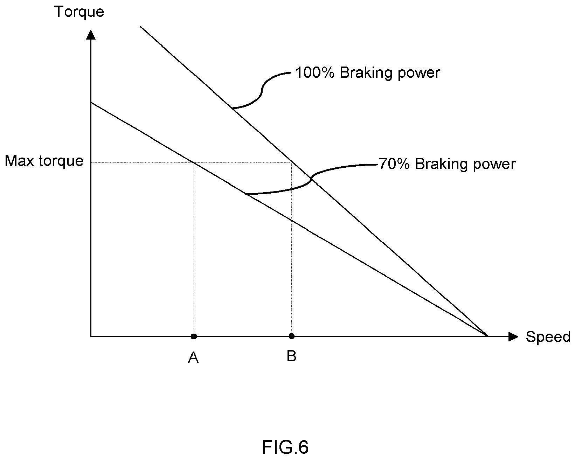

FIG. 6 shows an example indicating shift point speeds at or below which a gear shift of the transmission should be carried out. The X-axis represents the rotational speed of the regenerative braking system 210, e.g. an electric motor, and the Y-axis represents the torque of the regenerative braking system 210. Moreover, point A marks the shift point speed for a braking event requiring an average braking power level of 70% of a maximum braking power that can be produced by the regenerative braking system 210 and point B indicates the shift point speed for a braking event requiring an average braking power level of 100% of a maximum braking power that can be produced by the regenerative braking system 210. The shift point speed at each one of point A and point B is determined based on a mathematical relationship between a rotational speed of the regenerative braking system 210, a maximum allowed power of the regenerative braking system 210and a maximum allowed torque of the regenerative braking system 210. More specifically, the maximum allowed torque and the maximum allowed power may refer to the physical limits of the regenerative braking system 210, with the maximum allowed power corresponding to a 100% braking power level. The rotational speed at shift point B may be determined using the following formula:

$$Speed_B = 100\% * \frac{Power_{max}}{Torque_{max}},$$

Moreover, the rotational speed at shift point A, which is for braking events that requiring an average braking power level of 70% of a maximum braking power that can be produced by the regenerative braking system 210, is determined using the following formula:

$$Speed_A = 70\% * \frac{Power_{max}}{Torque_{max}},$$

It shall be noted that the above calculated speeds are an angular speed and may be further converted to rotational speed.

Once the shift point is determined, the method may further comprise the following optional actions:

S8: obtaining a current vehicle speed and a current regenerative braking system speed indicative of a current rotational speed of a portion of the regenerative braking system,

S9: determining a predicted level or value for each one of the following parameters comprised in braking characteristic data: a predicted braking duration level associated with a braking duration of the upcoming braking event, a predicted vehicle final speed associated with a vehicle speed at the end of the upcoming braking event, and a predicted average braking power level for performing the upcoming braking event,

S10: selecting the gear that is currently engaged in response to determining that at least one of the following criteria is fulfilled:

○ the predicted braking duration level is below a first braking duration threshold level, for instance, 2 seconds, or
○ the predicted average braking power level is below a first braking power threshold level, for instance 30% of a maximum braking power that can be produced by the regenerative braking system 210, or
○ an absolute value of the difference between the predicted final vehicle speed and the obtained current vehicle speed is below a predetermined speed difference threshold, and the obtained current regenerative braking system speed is higher than the shift point speed.

Alternatively, or additionally, the method may further comprise:

S11: selecting a gear that is lower than the gear that is currently engaged if the following criterion is fulfilled:

◦ the obtained current regenerative braking system speed is lower than the shift point speed.

or alternatively if the following criteria are fulfilled:

◦ the predicted braking duration level is above a second braking duration threshold level, for example, 10 seconds, and
◦ the obtained current regenerative braking system speed is equal to, or higher than the shift point speed, if the regenerative braking system speed is expected to be lower than the shift point speed during the upcoming braking event.

In some examples, the computer system 400 may check the condition for staying on the current gear is fulfilled e.g., the criteria described in paragraph 80 are fulfilled. If any of these criteria are fulfilled, a decision is made to select the gear that is currently engaged. If the condition for staying on the current gear is not fulfilled, the computer system 400 may continue and check if the condition for downshift is fulfilled, e.g., the criteria described in paragraph 81. If none of the above conditions are fulfilled, the computer system 400 may nevertheless select the current gear.

Moreover, the method may further comprise:

in response to selecting the gear that is lower than the gear that is currently engaged, S12: determining a time point to initiate the engagement of the selected gear, and

S13: issuing control data for controlling the transmission 200 to engage the selected gear at the determined time point.

If the obtained current regenerative braking system speed is higher than the shift point speed, the time point corresponds to an instant when a motor speed is substantially equal to the shift point speed.

In some examples, the control data for controlling a transmission 200 of a vehicle during braking comprises information indicative of the gear to be engaged by the transmission 200.

Moreover, the computer system 400 may be adapted to issue control data to the transmission 200 for controlling the transmission 200 to engage the selected gear. In a similar vein, the method of the present disclosure may comprise issuing, by the processing circuitry, control data to the transmission 200 for controlling the transmission 200 to engage the selected gear.

FIG 7. illustrates a computer system 400 for preforming the method. Computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets) of instructions to perform any one or more of the methodologies discussed herein. Accordingly, any reference in the disclosure and/or claims to a computer system, computing system, computer device, computing device, control system, control unit, electronic control unit ECU), processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN) bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP), an Application Specific Integrated Circuit ASIC), a Field Programmable Gate Array FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM), electrically erasable programmable read-only memory EEPROM), etc.), and volatile memory **410** e.g., random-access memory RAM)), or any other medium which can be used to carry or store desired program code in the form of machine-executable instructions or data structures and which can be accessed by a computer or other machine with processing circuitry **402**. A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE) or serial advanced technology attachment SATA)), HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules) can be implemented as software and/or hard-coded in circuitry to implement the functionality described herein in whole or in part. The modules may be stored in the storage device **414** and/or in the volatile memory **410,** which may include an operating system **416** and/or one or more program modules **418**. All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product e.g., readable storage medium) storing the computer program **420** thereon, where at least a portion of a computer program **420** may be loadable e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE) 1394 serial port, a Universal Serial Bus USB) port, an IR interface, and the like. The computer system **400** may include an output device interface **424** configured to forward output, such as to a display, a video display unit e.g., a liquid crystal display LCD) or a cathode ray tube CRT)). The computer system **400** may include a communications interface **426** suitable for communicating with a network as appropriate or desired.

Moreover, the present disclosure may be exemplified by any one of the below examples and combination of examples.

Example 1: A computer system (400) comprising processing circuitry configured to issue control data for controlling a transmission (200) of a vehicle (1) during a braking event (300), the transmission (200) being adapted to individually engage each one of a plurality of gears, wherein the processing circuitry is further configured to:

- identify an upcoming braking event (300) during which braking of the vehicle (1) is performed,
- obtain driving characteristic data comprising data indicative of a current or predicted driving condition of the vehicle;
- input the driving characteristic data to a braking characteristic model to determine braking characteristic data indicative of predicted braking characteristics during the upcoming braking event (300); and
- select a gear to be engaged by the transmission (200) on the basis of the braking characteristic data.

Example 2: The computer system (400) of Example 1, wherein the braking characteristic data comprises information indicative of one or more of the following parameters: a braking duration (300), a final vehicle speed at the end of the braking event (300), and an average braking power required for preforming the braking event (300).

Example 3: The computer system (400) of Example 2, wherein at least one, preferably each one, of the parameters of the braking characteristics is classified into one of the following categories: a high level, a medium level, or a low level.

Example 4: The computer system (400) of any one of Examples 1-3, wherein the vehicle (1) comprises a regenerative braking system (210) being adapted to convert at least a portion of the vehicle's kinetic energy into electric energy during a braking event (300), wherein the processing circuitry is configured to select the gear to be engaged by the transmission (200) on the basis of the braking characteristic data such that at least one of the following conditions is fulfilled: an amount of the electric energy that can be converted by the regenerative braking system during the braking event (300) is above an energy conversion threshold; a drive comfort parameter of the vehicle is within an allowable drive comfort parameter range.

Example 5: The computer system (400) of Example 4, wherein the processing circuitry is configured to select the gear to be engaged by the transmission (200) on the basis of the braking characteristic data such that a torque imparted on the regenerative braking system (210) during the upcoming braking event (300) is below a maximum allowed torque.

Example 6: The computer system (400) of Example 5, wherein the processing circuitry is further configured to:

- on the basis of the maximum allowed torque, an average braking power required for preforming the braking event and "preferably also a maximum allowed power that can be imparted on the regenerative braking system (210) during the upcoming braking event (300), determine a shift point speed indicative of a rotational speed of a portion of the regenerative braking system (210) at or below which a gear shift of the transmission (200) should be carried out.

Example 7: The computer system (400) of Examples 5-6, when dependent on Example 2, wherein the processing circuitry is further configured to:

- obtain a current vehicle speed and a current regenerative braking system speed indicative of a current rotational speed of a portion of the regenerative braking system (210),

- determine a predicted level or value for each one of the following parameters comprised in braking characteristic data: a predicted braking duration level associated with a braking duration of the upcoming braking event, a predicted vehicle final speed associated with a vehicle speed at the end of the upcoming braking event, and a predicted average braking power level for performing the upcoming braking event,

- select the gear that is currently engaged in response to determining that at least one of the following criteria is fulfilled following criteria:

  ◦ the predicted braking duration level is below a first braking duration threshold level, or
  ◦ the predicted average braking power level is below a first braking power threshold level, or
  an absolute value of the difference between the predicted final vehicle speed and the obtained current vehicle speed is below a predetermined speed difference threshold, and the obtained current regenerative braking system speed is higher than the shift point speed.

Example 8: The computer system (400) of Examples 5-7, when dependent on any one of Examples 2-3, wherein the processing circuitry is further configured to:

- obtain a current vehicle speed and a current regenerative braking system speed indicative of a current rotational speed of a portion of the regenerative braking system (210),

- determine a predicted level or value for each one of the following parameters comprised in braking characteristic data: a predicted braking duration level associated with a braking duration for the upcoming braking event, a predicted vehicle final speed associated with a vehicle speed at the end of the upcoming braking event, and a predicted average braking power level for performing the upcoming braking event, and

- select a gear that is lower than the gear that is currently engaged if the following criterion is fulfilled:

  ◦ the obtained current regenerative braking system speed is lower than the shift point speed,

or alternatively if the following criteria are fulfilled:

  ◦ the predicted braking duration level is above a second braking duration threshold level, wherein the second braking duration threshold level is preferably higher than the first braking duration threshold level, and

the obtained current regenerative braking system speed is equal to, or higher than the shift point speed, if the regenerative braking system speed is expected to be lower than the shift point speed during the upcoming braking event.

Example 9: The computer system (400) of Example 8, wherein the processing circuitry is further configured to:

- in response to selecting the gear that is lower than the gear that is currently engaged, determine a time point to initiate the engagement of the selected gear, and
- issue control data for controlling the transmission (200) to engage the selected gear at the determined time point.

Example 10: The computer system (400) of Example 9, wherein the time point corresponding to an instant when a motor speed is substantially equal to the shift point speed, if the obtained current regenerative braking system speed is higher than the shift point speed.

Example 11: The computer system (400) of any one of the preceding Examples, wherein the current or predicted driving condition of the vehicle comprises one or more of the following parameters: a vehicle length, preferably measured between a front bumper to a rearmost point of a rear bumper; a gross vehicle weight; a current speed; a current cruise control set speed and a brake pedal depression state.

Example 12: The computer system (400) of any one of the preceding Examples, wherein the current or predicted driving condition of the vehicle comprises one or more of the following: a road profile of a road that the vehicle is intended to follow, preferably the road profile comprises at least one of the following: an inclination of the road, a curvature of the road, an existence of roundabouts or crossings on the road, and traffic lights information.

Example 13: The computer system (400) of Example 12, wherein the current or predicted driving condition of the vehicle further comprises information about a preceding vehicle in accordance with at least one of the following: a distance to the preceding vehicle, a vehicle speed of the preceding vehicle, and an acceleration of the preceding vehicle.

Example 14: The computer system (400) of any of the preceding Examples, wherein the braking characteristic model is a trained model, preferably a trained learning model such as a machine-learning model, more preferred a neural network model.

Example 15: The computer system (400) of Example 14, wherein the trained model is trained using braking events (300) that have been performed, by real-world vehicles or by use of computer simulations, at known driving conditions of the vehicle.

Example 16: The computer system (400) of any one of the preceding Examples, wherein the control data for controlling a transmission (200) of a vehicle (100) during a braking event (300) comprises information indicative of the gear to be engaged by the transmission (200).

Example 17: The computer system (400) of any one of the preceding Examples, wherein the processing circuitry is further configured to:

- issue control data to the transmission (200) for controlling the transmission 200 to engage the selected gear.

Example 18: A vehicle (1) comprising the computer system (400) of any one of the preceding Examples, vehicle comprising a transmission (200) adapted to individually engage each one of a plurality of gears.

Example 19: The vehicle according to Example 18, further comprising a set of wheels (220) and a regenerative braking system (210) being adapted to convert at least a portion of the vehicle's kinetic energy into electric energy during a braking event (300), the regenerative braking system (210) and the set of wheels being located on opposite sides of the transmission (200), as seen along a direction of torque transfer from the wheels to the regenerative braking system (210) during a braking event (300).

Example 20: A computer-implemented method for issuing control data for controlling a transmission (200) of a vehicle during a braking event (300), the transmission (200) being adapted to individually engage each one of a plurality of gears, the method comprising:

- identifying (S 1), by processing circuitry of a computer system (400), an upcoming braking event (300) during which braking of the vehicle is performed;
- obtaining (S2), by the processing circuitry, driving characteristic data comprising data indicative of a current or predicted driving condition of the vehicle;
- inputting (S3), by the processing circuitry, the driving characteristic data to a braking characteristic model to determine braking characteristic data indicative of predicted braking characteristics during the upcoming braking event (300); and

- selecting (S4), by the processing circuitry, a gear to be engaged by the transmission (200) on the basis of the braking characteristic data.

Example 21: The method of Example 20, wherein the braking characteristic data comprises information indicative of one or more of the following parameters: a braking duration, a final vehicle speed at the end of the braking event (300), and an average braking power required for preforming the braking event (300).

Example 22: The method of Example 21, wherein at least one, preferably each one, of the parameters of the braking characteristics is classified into one of the following categories: a high level, a medium level, or a low level.

Example 23: The method of any one of Examples 20-22, wherein the vehicle comprises a regenerative braking system (210) being adapted to convert at least a portion of the vehicle's kinetic energy into electric energy during a braking event (300), wherein the method further comprises: selecting (S5), by the processing circuitry, the gear to be engaged by the transmission (200) on the basis of the braking characteristic data such that at least one of the following conditions is fulfilled: an amount of the electric energy that can be converted by the regenerative braking system during the braking event (300) is above an energy conversion threshold; a drive comfort parameter of the vehicle is within an allowable drive comfort parameter range.

Example 24: The method of any one of Examples 20-23, wherein the method further comprises: selecting (S6), by the processing circuitry, the gear to be engaged by the transmission (200) on the basis of the braking characteristic data such that a torque imparted on the regenerative braking system (210) during the upcoming braking event (300) is below a maximum allowed torque.

Example 25: The method of Example 24, further comprising:

- on the basis of the maximum allowed torque, an average braking power required for preforming the braking event and a maximum allowed power that can be imparted on the regenerative braking system (210) during the upcoming braking event (300), determining (S7), by the processing circuitry, a shift point indicative speed of a rotational speed of a portion of the regenerative braking system (210) at or below which a gear shift of the transmission (200) should be carried out.

Example 26: The method of Example 25 further comprising:

- obtaining (S8), by the processing circuitry, a current vehicle speed and a current regenerative braking system speed indicative of a current rotational speed of a portion of the regenerative braking system (210),
- determining (S9), by the processing circuitry, a predicted level or value for each one of the following parameters comprised in braking characteristic data: a predicted braking duration level associated with a braking duration of the upcoming braking event, a predicted vehicle final speed associated with a vehicle speed at the end of the upcoming braking event, and a predicted average braking power level for performing the upcoming braking event,
- selecting (S10), by the processing circuitry, the gear that is currently engaged in response to determining that at least one of the following criteria is fulfilled:

  ◦ the predicted braking duration level is below a first braking duration threshold level, or
  ◦ the predicted average braking power level is below a first braking power threshold level, or
  ◦ an absolute value of the difference between the predicted final vehicle speed and the obtained current vehicle speed is below a predetermined speed difference threshold, and the obtained current regenerative braking system speed is higher than the shift point speed.

Example 27: The method of Examples 25-26, further comprising:

- obtaining (S8), by the processing circuitry, a current vehicle speed and a current regenerative braking system speed indicative of a current rotational speed of a portion of the regenerative braking system (210),
- determining (S9), by the processing circuitry, a predicted level or value for each one of the following parameters comprised in braking characteristic data: a predicted braking duration level associated with a braking duration for the upcoming braking event, a predicted vehicle final speed associated with a vehicle speed at the end of the upcoming braking event, and a predicted average braking power level for performing the upcoming braking event, and

- selecting (S11), by the processing circuitry, a gear that is lower than the gear that is currently engaged if the following criteria is fulfilled:

  ○ the obtained current regenerative braking system speed is lower than the shift point speed,

or alternatively if the following criteria is fulfilled:

  ○ the predicted braking duration level is above a second braking duration threshold level, wherein the second braking duration threshold level is preferably higher than the first braking duration threshold level, and
  ○ the obtained current regenerative braking system speed is equal to, or higher than the shift point speed.

Example 28: The method of Example 27, further comprising:

- in response to selecting the gear that is lower than the gear that is currently engaged, determining (S12), by the processing circuitry, a time point to initiate the engagement of the selected gear, and
- issuing (13), by the processing circuitry, control data for controlling the transmission (200) to engage the selected gear at the determined time point.

Example 29: The method of Example 28, wherein the time point corresponding to an instant when a motor speed is substantially equal to the speed at the shift point speed, if the obtained current regenerative braking system speed is higher than the speed at the shift point speed

Example 30: The method of any one of Examples 20-29, wherein the current or predicted driving condition of the vehicle comprises one or more of the following parameters: a vehicle length, preferably measured between a front bumper to a rearmost point of a rear bumper; a gross vehicle weight; a current speed; a current cruise control set speed and a brake pedal depression state.

Example 31: The method of any one of Examples 20-30, wherein the current or predicted driving condition of the vehicle comprises one or more of the following: a road profile of a road that the vehicle is intended to follow, preferably the road profile comprises at least one of the following: an inclination of the road, a curvature of the road, an existence of roundabouts and/or crossings on the road, and traffic lights information.

Example 32: The method of Example 31, wherein the current or predicted driving condition of the vehicle further comprises information about a preceding vehicle in accordance with at least one of the following: a distance to the preceding vehicle, a vehicle speed of the preceding vehicle, and an acceleration of the preceding vehicle.

Example 33: The method of any one of Examples 20-32, wherein the braking characteristic model is a trained model, preferably a trained learning model such as a machine-learning model, more preferred a neural network model.

Example 34: The method of Example 33, wherein the trained model is trained using braking events that have been performed, by real-world vehicles or by use of computer simulations, at known driving conditions of the vehicle.

Example 35: The method of any one of Examples 20-34, wherein the control data for controlling a transmission (200) of a vehicle during braking comprises information indicative of the gear to be engaged by the transmission (200).

Example 36: The method of any one of Examples 20-35, further comprising issuing, by the processing circuitry, control data to the transmission 200 for controlling the transmission 200 to engage the selected gear.

Example 37: A computer program product comprising program code for performing, when executed by the processing circuitry, the method of any of Examples 20-36.

Example 38: A non-transitory computer-readable storage medium comprising instructions, which when executed by the processing circuitry, cause the processing circuitry to perform the method of any of Examples 20-37.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry configured to issue control data for controlling a transmission (200) of a vehicle (1) during a braking event (300), the transmission (200) being adapted to individually engage each one of a plurality of gears, wherein the processing circuitry is further configured to:

   - identify an upcoming braking event (300) during which braking of the vehicle (1) is performed;
   - obtain driving characteristic data comprising data indicative of a current or predicted driving condition of the vehicle;
   - input the driving characteristic data to a braking characteristic model to determine braking characteristic data indicative of predicted braking characteristics during the upcoming braking event (300); and
   - select a gear to be engaged by the transmission (200) on the basis of the braking characteristic data.

2. A vehicle (1) comprising the computer system (400) of claim 1, the vehicle comprising a transmission (200) adapted to individually engage each one of a plurality of gears.

3. The vehicle according to claim 2, further comprising a set of wheels (220) and a regenerative braking system (210) being adapted to convert at least a portion of the vehicle's kinetic energy into electric energy during a braking event (300), the regenerative braking system (210) and the set of wheels being located on opposite sides of the transmission (200), as seen along a direction of torque transfer from the wheels to the regenerative braking system (210) during a braking event (300).

4. A computer-implemented method for issuing control data for controlling a transmission (200) of a vehicle during a braking event (300), the transmission (200) being adapted to individually engage each one of a plurality of gears, the method comprising:

   - identifying (S1), by processing circuitry of a computer system (400), an upcoming braking event (300) during which braking of the vehicle is performed;
   - obtaining (S2), by the processing circuitry, driving characteristic data comprising data indicative of a current or predicted driving condition of the vehicle;
   - inputting (S3), by the processing circuitry, the driving characteristic data to a braking characteristic model to determine braking characteristic data indicative of predicted braking characteristics during the upcoming braking event (300); and
   - selecting (S4), by the processing circuitry, a gear to be engaged by the transmission (200) on the basis of the braking characteristic data.

5. The method of claim 4, wherein the braking characteristic data comprises information indicative of one or more of the following parameters: a braking duration, a final vehicle speed at the end of the braking event (300), and an average braking power required for preforming the braking event (300).

6. The method of claim 5, wherein at least one, preferably each one, of the parameters of the braking characteristics is classified into one of the following categories: a high level, a medium level, or a low level.

7. The method of any one of claims 4-6, wherein the vehicle comprises a regenerative braking system (210) being adapted to convert at least a portion of the vehicle's kinetic energy into electric energy during a braking event (300), wherein the method further comprises: selecting (S5), by the processing circuitry, the gear to be engaged by the transmission (200) on the basis of the braking characteristic data such that at least one of the following conditions is fulfilled: an amount of the electric energy that can be converted by the regenerative braking system (210) during the braking event (300) is above an energy conversion threshold and a drive comfort parameter of the vehicle is within an allowable drive comfort parameter range.

8. The method of claim 7, wherein the method further comprises: selecting (S6), by the processing circuitry, the gear to be engaged by the transmission (200) on the basis of the braking characteristic data such that a torque imparted on the regenerative braking system (210) during the upcoming braking event (300) is below a maximum allowed torque.

9. The method of claim 8, further comprising:

- on the basis of the maximum allowed torque, an average braking power required for preforming the braking event and preferably also a maximum allowed power that can be imparted on the regenerative braking system (210) during the upcoming braking event (300), determining (S7), by the processing circuitry, a shift point speed indicative of a rotational speed of a portion of the regenerative braking system (210) at or below which a gear shift of the transmission (200) should be carried out.

10. The method of claim 9, further comprising:

- obtaining (S8), by the processing circuitry, a current vehicle speed and a current regenerative braking system speed indicative of a current rotational speed of a portion of the regenerative braking system (210),
- determining (S9), by the processing circuitry, a predicted level or value for each one of the following parameters comprised in braking characteristic data: a predicted braking duration level associated with a braking duration of the upcoming braking event, a predicted vehicle final speed associated with a vehicle speed at the end of the upcoming braking event, and a predicted average braking power level for performing the upcoming braking event,
- selecting (S10), by the processing circuitry, the gear that is currently engaged in response to determining that at least one of the following criteria is fulfilled:

○ the predicted braking duration level is below a first braking duration threshold level, or
○ the predicted average braking power level is below a first braking power threshold level, or
○ an absolute value of the difference between the predicted final vehicle speed and the obtained current vehicle speed is below a predetermined speed difference threshold, and the obtained current regenerative braking system speed is higher than the shift point speed.

11. The method of claim 10, further comprising:

- obtaining (S8), by the processing circuitry, a current vehicle speed and a current regenerative braking system speed indicative of a current rotational speed of a portion of the regenerative braking system (210),
- determining (S9), by the processing circuitry, a predicted level or value for each one of the following parameters comprised in braking characteristic data: a predicted braking duration level associated with a braking duration for the upcoming braking event, a predicted vehicle final speed associated with a vehicle speed at the end of the upcoming braking event, and a predicted average braking power level for performing the upcoming braking event, and
- selecting (S11), by the processing circuitry, a gear that is lower than the gear that is currently engaged if the following criterion is fulfilled:

○ the obtained current regenerative braking system speed is lower than the shift point speed.

or alternatively if the following criteria are fulfilled:

○ the predicted braking duration level is above a second braking duration threshold level, wherein the second braking duration threshold level is preferably higher than the first braking duration threshold level, and
○ the obtained current regenerative braking system speed is equal to, or higher than the shift point speed, if the regenerative braking system speed is expected to be lower than the shift point speed during the upcoming braking event.

12. The method of any one of claims 4-11, wherein the current or predicted driving condition of the vehicle comprises one or more of the following parameters: a vehicle length, preferably measured between a front bumper to a rearmost point of a rear bumper; a gross vehicle weight, a current speed, a current cruise control set speed, a brake pedal depression state, a road profile of a road that the vehicle is intended to follow, preferably the road profile comprises at least one of the following: an inclination of the road, a curvature of the road, an existence of roundabouts and/or crossings on the road, traffic lights information, and information about a preceding vehicle in accordance with at least one of the following: a distance to the preceding vehicle, a vehicle speed of the preceding vehicle, and an acceleration of the preceding vehicle.

13. The method of any one of claims 4-12, wherein the braking characteristic model is a trained model, preferably a trained learning model such as a machine-learning model, more preferred a neural network model.

14. A computer program product comprising program code for performing, when executed by the processing circuitry, the method of any of claims 4-13.

15. A non-transitory computer-readable storage medium comprising instructions, which when executed by the processing circuitry, cause the processing circuitry to perform the method of any of claims 4-13.

1

400

200 211

220

FIG. 1

FIG. 2

Fig. 3

FIG. 4

FIG. 5

FIG.6

FIG.7

| | Europäisches Patentamt<br>European Patent Office<br>Office européen des brevets | **EUROPEAN SEARCH REPORT** | **Application Number**<br>EP 24 18 6324 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 004368 A1 (SCANIA CV AB [SE]) 16 January 2020 (2020-01-16) | 1-6, 12-15 | INV.<br>B60W20/30 |
| Y | * the whole document * | 6-9 | |
| A | * paragraphs [0008], [0012], [0033], [0034], [0050] - [0063]; figures 2,4,5 * | 10,11 | |
| | ----- | | |
| Y | US 2017/197609 A1 (COLVIN DANIEL SCOTT [US] ET AL) 13 July 2017 (2017-07-13)<br>* paragraphs [0008], [0012], [0052] - [0059]; figures 2-5,7 *<br>* the whole document * | 7-9 | |
| | ----- | | |
| A | US 2020/108722 A1 (VOLKMAR KAI [DE] ET AL) 9 April 2020 (2020-04-09)<br>* paragraphs [0027], [0028], [0068] - [0071]; figures 3a,3b *<br>* the whole document * | 7,9,10 | |
| | ----- | | |
| Y | US 2018/208200 A1 (DU GWANG IL [KR] ET AL) 26 July 2018 (2018-07-26) | 6 | |
| A | * paragraphs [0044] - [0050]; figures 6,7 * | 1,14,15 | TECHNICAL FIELDS SEARCHED (IPC) |
| | ----- | | B60W |
| A | US 2019/241078 A1 (TSUBUKI YUTA [JP]) 8 August 2019 (2019-08-08)<br>* paragraphs [0028] - [0039]; figures 2-7 * | 1,14,15 | F16H |
| | ----- | | |

The present search report has been drawn up for all claims

| Place of search | Date of completion of the search | Examiner |
|---|---|---|
| Munich | 28 November 2024 | Plenk, Rupert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6324

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2024

| Patent document cited in search report | Publication date | Patent family member(s) | Publication date |
|---|---|---|---|
| DE 102019004368 A1 | 16-01-2020 | DE 102019004368 A1<br>SE 1850885 A1 | 16-01-2020<br>12-01-2020 |
| US 2017197609 A1 | 13-07-2017 | CN 107010046 A<br>DE 102017100501 A1<br>US 2017197609 A1 | 04-08-2017<br>13-07-2017<br>13-07-2017 |
| US 2020108722 A1 | 09-04-2020 | CN 111002836 A<br>DE 102018217121 A1<br>US 2020108722 A1 | 14-04-2020<br>09-04-2020<br>09-04-2020 |
| US 2018208200 A1 | 26-07-2018 | CN 108357393 A<br>KR 20180088209 A<br>US 2018208200 A1 | 03-08-2018<br>03-08-2018<br>26-07-2018 |
| US 2019241078 A1 | 08-08-2019 | CN 110126627 A<br>DE 102019101849 A1<br>JP 7024472 B2<br>JP 2019137138 A<br>US 2019241078 A1 | 16-08-2019<br>08-08-2019<br>24-02-2022<br>22-08-2019<br>08-08-2019 |

EPO FORM P0459

For more details about this annex : see Official Journal of the European Patent Office, No. 12/82